# EUROPEAN PATENT SPECIFICATION

(11) **EP 3 336 811 B1**
(45) Date of publication and mention of the grant of the patent: **25.03.2020**
(21) Application number: 17205806.7
(22) Date of filing: 07.12.2017
(51) Int. Cl.: G08B 13/196, H04N 7/18

(54) **MONITORING SYSTEM USING CAMERA, AND SENSING DEVICE**
ÜBERWACHUNGSSYSTEM MIT KAMERA UND SENDEVORRICHTUNG
SYSTÈME DE SURVEILLANCE UTILISANT UNE CAMÉRA ET DISPOSITIF D'ENVOI

(30) Priority: 16.12.2016 KR 20160173028
(43) Date of publication of application: 20.06.2018
(73) Proprietor: OTS Co., Ltd., Daejeon 00000 (KR)
(72) Inventor: SONG, Moo Sang, 00000 Daejeon (KR)
(74) Representative: Isarpatent

(56) References cited:
- EP-A1- 2 610 671
- WO-A1-2015/156513
- WO-A1-2016/137055
- GB-B- 2 440 553
- US-A- 5 214 411
- US-A1- 2006 250 237

## Description

### BACKGROUND

### 1. Field of the Invention

The present invention relates to a monitoring system using a camera, and more particularly, to a monitoring system using a camera capable of controlling, on the basis of a detection signal detected by the sensing device installed in a monitoring area, a capturing direction of the camera in a direction toward the sensing device that has output the detection signal, capturing intrusion or approach of an object to be sensed.

### 2. Discussion of Related Art

A closed-circuit television (CCTV) for monitoring a specific area refers to a television method in which image information captured by a camera is transmitted to a small number of specific recipients, the small number of specific recipients acquire desired information from the received image information, and an area to be monitored for a certain purpose is displayed as an image to be observed. CCTV systems are used for a wide variety of purposes such as security and monitoring, industrial use, image monitoring of a vehicle, and traffic management.

The CCTV systems have an advantage of being able to be installed in locations that require security such as an elevator, an entrance door, a parking lot entrance, a trail, and a play-ground and store a captured image or allow real-time monitoring from a remote place. However, the CCTV systems have problems in that a labor force for real-time monitoring is always required and entire captured images have to be checked one by one when an accident occurs.

Various systems for controlling access are provided in areas (locations) where only certain people are permitted to enter such as a construction site, a farm, an orchard, a building, and an office. Particularly, in schools, playgrounds, construction sites, farms, orchards, open storage spaces, and the like, to restrict access of a number of unspecified individuals, a fence is installed or a warning is installed in a corresponding area to limit access thereto.

However, a facility such as the above installed in a limited access area to limit access may have a problem of not being able to block malicious approach, and thus the CCTV system is installed in addition to the facility to limit access of a number of unspecified individuals. However, the CCTV system is also unable to take action before break-in occurs.

To solve the above problem, a monitoring system and a method for the same has been disclosed in Korean Patent Registration No. 10-1060414.

The above disclosure relates to a monitoring system and a method for the same in which a single camera is used to capture an area to be monitored that includes a plurality of divided areas, and, when a detection signal is generated with respect to any of the divided areas of the area to be monitored, a sub-channel image corresponding to the divided area from which the detection signal is generated is extracted from an image captured at a time point, at which the detection signal is generated, and provided.

Although the above disclosure may be effective for areas in which a monitoring area is relatively narrow, the above disclosure may not be effective when a monitoring area is relatively wide as in construction sites, farms, orchards, and the like.

A monitoring system for moving things using CCTV fluoroscopy has been disclosed in Korean Patent Registration No. 10-1360244.

The disclosure relates to illegal parking control in which a moving picture captured by an omnidirectional camera is stored in a moving picture storage folder of a storage device, in a process of detecting an active object from the stored moving picture, an active area in which a luminance changes is differentiated from the captured moving picture, x-y coordinates of the active area are extracted, and a still image is stored, a tracking and monitoring camera performs a pan/tilt operation and zooms in to the x-y coordinates of the active area to capture an infrared-filtered black-and-white fluoroscopy image of the active area and store the captured image in a fluoroscopy still image storage folder of the storage device, a car number plate image is extracted from the fluoroscopy still image to convert the car number plate image into car number plate texts using number recognition software, capture an image with a still image captured in separating a background area, and store the captured image in a car image storage folder, and when the captured image is captured within an illegal parking monitoring zone during the storing of the car image, an illegal parking time is measured, and the captured image and the car number plate texts are output when the illegal parking control time is exceeded.

However, the above disclosure has a disadvantage in that image distortion occurs in a process in which the image captured by the omnidirectional camera is converted into a planar image, and an ability of identifying an access-restricted object from a stored image is degraded due to the image distortion. Further, in the above disclosure, an area in which a luminance of the captured image changes is set as an active area to store a still image. Thus, when the disclosure is applied to a wide area, there is a problem in that a plurality of omnidirectional cameras have to be installed.

### Related Art Document

Patent Document
(Patent Document 0001) KR 10-1060414 B1 (August 23, 2011)
(Patent Document 0002) KR 10-1360244 B1 (February 03, 2014)

Furthermore, the following document also relates to the technological background of the present invention: US 2006/250237 A1 (WHITTEN STEPHEN [US] ET AL) 9 November 2006 (2006-11-09) This document discloses a monitoring system using an illumination, a video camera and a communication unit. Further the monitoring system includes so-called personnel infrared sensor units and detection data from such personnel infrared sensor units is transmitted via wireless or radio signals to a central control unit. The central control unit adjusts a capturing direction of the video camera to capture an overlapping sensing area of adjacent personnel infrared sensor units which have transmitted detection data. Further, a speaker generates an alert sound for a warning procedure when two such adjacent areas indicate the presence of a person in angular areas which overlap.

### SUMMARY OF THE INVENTION

The present invention has been devised to solve the problems of the related art, and it is the object of the present invention to provide a monitoring system using a camera capable of effectively capturing intrusion or approach of an object to be sensed. This object is solved by a monitoring system of claim 1 and further advantageous embodiments and improvements of the invention are listed in the dependent claims. Hereinafter, before coming to a detailed description of the embodiments of the invention with reference to the attached drawings, some aspects of the invention are summarized below which contribute to the understanding of the invention.

According to one aspect, the monitoring system is capable of controlling, on the basis of a detection signal detected by the sensing device installed in a monitoring area, a capturing direction of the camera in a direction toward the sensing device that has output the detection signal.

Another aspect provides a monitoring system using a camera, and a sensing device capable of sensing a wide area with a single camera, saving an operation cost of the system by operating the camera only when the sensing device is operating, and enhancing efficiency of image storage.

The monitoring system, according to another aspect, using a camera, and a sensing device, includes a plurality of sensing devices configured to set a predetermined area as a sensing area, sense an object approaching within the sensing area, and output a detection signal of the sensed object, a capturing device having a camera, a central control unit configured to receive the detection signal from the sensing device, adjust a capturing direction of the capturing device to capture the sensing area of the sensing device that has transmitted the detection signal, and store and manage an image captured by the capturing device, and an alert device configured to generate an alert sound or alert light in response to an alert signal output from the central control unit.

Here, according to another aspect, when the detection signal of the object is received from the plurality of sensing devices, the central control unit adjusts a capturing direction of the camera to capture an overlapping area of sensing areas of the sensing devices.

The central control unit, according to another aspect, may include an image storage part configured to receive, store, and manage the image captured by the capturing device, an identifying and sensing part configured to generate an identification code of the object from the image received from the capturing device, an alert part configured to generate an alert signal on the basis of a type of the object identified by the identifying and sensing part, and a display part configured to display the image received from the capturing device.

Here, according to another aspect, the alert signal may be a voice message when the identification code of the identified object indicates that the object is a human being, and the alert signal may be an ultrasonic signal when the identification code of the identified object indicates that the object is an animal.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings. However, in connection therewith, it should be noted that the invention is defined by the attached claims 1-4 and embodiments which are not covered by these claims should be understood as examples and aspects which contribute to the understanding of the invention. In the drawings:
FIG. 1 is a schematic view of an overall configuration of a monitoring system using an auto-lift, a camera, and a sensing device according to the present invention;
FIG. 2 is a schematic block diagram of a capturing device applied to the monitoring system using an auto-lift, a camera, and a sensing device according to the present invention;
FIG. 3 is an exploded cross-sectional view of an example of the capturing device applied to the monitoring system using an auto-lift, a camera, and a sensing device according to the present invention;
FIG. 4 is a block diagram of a central control unit applied to the monitoring system using an auto-lift, a camera, and a sensing device according to the present invention;
FIGS. 5 and 6 are views illustrating examples of positions of sensing devices based on the capturing device in the monitoring system using an auto-lift, a camera, and a sensing device according to the present invention;
FIG. 7 is a view of a table showing the positions of the sensing devices based on the capturing device in the monitoring system using an auto-lift, a camera, and a sensing device according to the present invention;
FIG. 8 is a view illustrating a photograph area of the capturing device in the monitoring system using an auto-lift, a camera, and a sensing device according to the present invention;
FIG. 9 is a view illustrating a configuration of the sensing device in the monitoring system using an auto-lift, a camera, and a sensing device according to the present invention; and
FIG. 10 is a view illustrating an interface for controlling the camera to be lifted and lowered by the central control unit applied to the monitoring system using an auto-lift, a camera, and a sensing device according to the present invention.

### DETAILED DESCRIPTION OF EXEMPLARY EMBODIMENTS

Hereinafter, exemplary embodiments of the present invention will be described in detail with reference to the accompanying drawings.

The present invention relates to a monitoring system using a camera, and a sensing device capable of controlling, on the basis of a detection signal detected by the sensing device installed in a monitoring area, a capturing direction of the camera in a direction toward the sensing device that has output the detection signal, capturing intrusion or approach of an object to be sensed, and facilitating maintenance and repair of the camera.

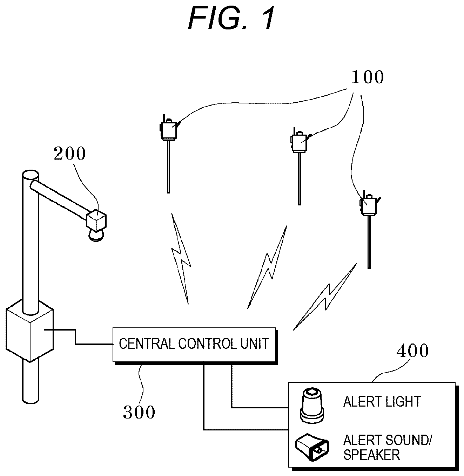

FIG. 1 is a schematic view of an overall configuration of a monitoring system using an auto-lift, a camera, and a sensing device according to the present invention.

Referring to FIG. 1, the monitoring system using an auto-lift, a camera, and a sensing device according to the present invention includes sensing devices 100, a capturing device 200, a central control unit 300, and an alert device 400.

The sensing devices 100 set a predetermined area as a sensing area, sense an object approaching within the sensing area, and output a detection signal of the sensed object.

Here, the sensing devices 100 may be configured using modules that use an ultrasonic sensor, an infrared sensor, a microwave sensor, or the like. For example, the sensing devices 100 may be configured using an infrared sensor, a microwave sensor, or the like to sense a human being or an animal. The sensing devices 100 may also be configured using a microwave sensor to increase a sensing distance and sense a moving object such as a vehicle that does not emit infrared rays.

The microwave sensor uses the Doppler radar principle. Waves emitted from an oscillator are radiated via an emitting antenna, scattering waves and reflected waves of the radiated waves are received by a receiving antenna, and a moving object is sensed by comparing the radiated waves and the received waves.

The microwave sensor has a sensing angle in the range of 100° to 130° and a sensing distance in the range of 15 m to 30 m. Therefore, the microwave sensor can sense an object from a farter distance compared to a general sensor and sense fine movement.

Accordingly, when the sensing devices 100 to which a microwave sensor is applied are adopted, the sensing devices 100 may be used even in poor environments due to heat, temperature, noise, humidity, airflow, dust, or the like, seldom malfunction, be manufactured in a small size, have a long sensing distance, and have a wide sensing angle.

The capturing device 200 has a camera 230 that is lifted or lowered in response to a lifting/lowering control signal. The capturing device 200 captures an image according to a capturing signal and transmits the captured image.

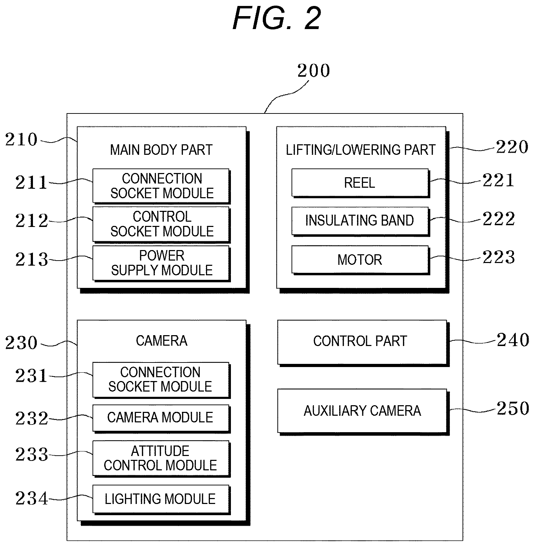

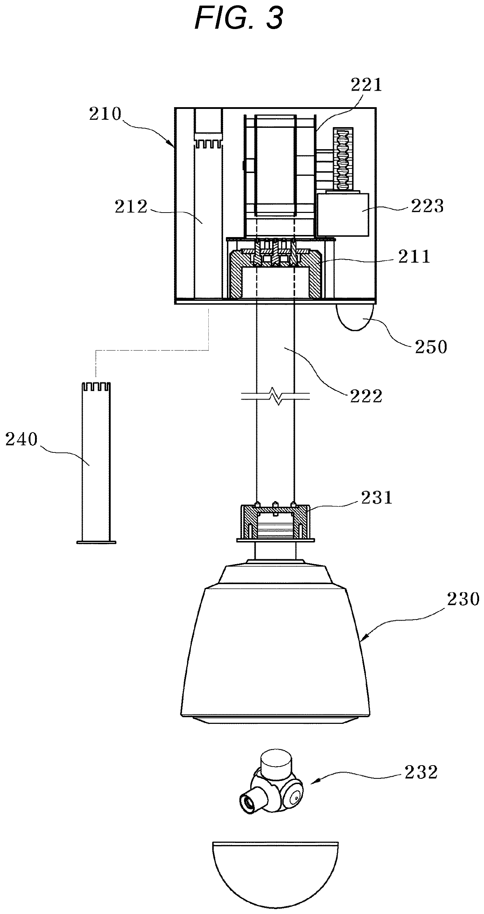

FIG. 2 is a schematic block diagram of a capturing device applied to the monitoring system using an auto-lift, a camera, and a sensing device according to the present invention, and FIG. 3 is an exploded cross-sectional view of an example of the capturing device applied to the monitoring system using an auto-lift, a camera, and a sensing device according to the present invention.

Referring to FIGS. 2 and 3, the capturing device 200 includes a main body part 210, a lifting/lowering part 220, the camera 230, and a control part 240. That is, the camera 230 is detached from or coupled to the main body part 210 by an operation of the lifting/lowering part 220 in response to the lifting/lowering control signal from the control part 240.

The main body part 210 is fixed and installed in a structure, is formed in a box shape, a cylindrical shape, or the like, and includes a connection socket module 211, a control socket module 212, and a power supply module 213 therein.

The connection socket module 211 is configured to supply power to the camera 230, control an attitude of the camera, and receive an image captured by the camera and is disposed at a lower part of the main body part 210.

The control socket module 212 is configured to have the control part 240 inserted thereinto and is formed to be open downward at a side surface of the main body part 210.

The power supply module 213 is configured to supply power according to an operation of the capturing device 200 and may be configured with commercial power or power produced by new renewable energy. The new renewable energy may include solar light, wind power, and the like.

The lifting/lowering part 220 is configured to lift and lower the camera 230 in response to a lifting/lowering control signal and includes a reel 221, an insulating band 222, and a motor 223.

The insulating band 222 is wound onto the reel 221, and the insulating band 222 is unwound from or wound onto the reel 221 according to forward and reverse rotations of the motor 223. The insulating band 222 is disposed to pass through the connection socket module 211 and has the camera 230 coupled at a front end thereof. The insulating band 222 is formed of a fibrous material having an insulation property and predetermined strength to prevent risk due to a leakage current and short circuit and maintain the strength even after winding and unwinding operations are repeatedly performed. Here, the predetermined strength refers to a strength higher than or equal to that capable of bearing the weight of the camera 230 that is hung from and coupled to the insulating band 222 but is not limited thereto.

Here, the insulating band 222 may be prevented from being twisted around the reel 221.

Generally, twisting may be suppressed better as a width of the insulating band is wider or a thickness thereof is thicker. Even when the insulating band is twisted, the insulating band is untwisted faster as the width of the insulating band is wider or the thickness thereof is thicker. However, because the weight of the insulating band increases as the width and the thickness thereof increase, the width and the thickness thereof should be selected within a proper range.

According to design conditions, a twisting preventing protrusion (not illustrated) for preventing twisting may be disposed at a side surface of the insulating band 222 in a longitudinal direction.

The motor 223 is configured to rotate the reel 221, and a motor capable of forward rotation and rearward rotation is used as the motor 223. Here, a worm wheel and a worm gear may be used to transmit a rotational force of the motor 223 to the reel 221. That is, a worm gear is installed at a rotating shaft of the motor 223, and a worm wheel engaged with the worm gear is installed at a rotating shaft of the reel 221. When the worm gear and the worm wheel are used to transmit the rotational force as above, unintended rotation of the reel 221 can be prevented, and the rotational force can be accurately and surely transmitted.to the reel 221.

The camera 230 is coupled to and hung from the front end of the insulating band 222 and performs a function of capturing an image.

The camera 230 includes a connection socket module 231, a camera module 232, an attitude control module 233, and a lighting module 234. Here, the capturing device 200 may further include an auxiliary camera 250.

The connection socket module 231 is electrically connected to the connection socket module 211 as the insulating band 222 is wound onto the reel 221, and performs a function of connecting the main body part 210 and the camera 230 to supply power, and transmit and receive an image information signal, a control signal, or the like.

The camera module 232 is configured to capture an image and may include a high-performance camera to capture an object at a far distance as needed according to conditions.

The attitude control module 233 is configured to adjust a capturing direction and a zoom range of the camera module 232. A panning angle, a tilting angle, and a zoom-in/zoom out range are adjusted in response to an input capturing signal.

Here, panning refers to horizontally moving the camera, and tilting refers to vertically moving the camera. Further, zoom-in/zoom-out refers to a function of magnifying/reducing a specific area.

The lighting module 234 is configured to radiate light to enhance an ability to identify an object at night or arouse the object's attention. A direction of the lighting module 234 is changed in synchronization with a capturing direction of the camera module 232.

The control part 240 is installed by being inserted into the control socket module 212. The control part 240 performs functions of controlling lifting or lowering of the camera module 232, controlling the camera module 232 to perform capturing, and controlling the camera module 232 to transmit a captured image, is formed in a box shape, and is inserted and fixed in the control socket module 212 formed in the main body part 210.

The control part 240 includes a printed circuit board for processing an image signal or a control signal, a micro-controller unit (MCU) arranged on the printed circuit board, and the like.

The auxiliary camera 250 is a device that is operated to capture an image when the camera 230 is detached from the main body part 210. The auxiliary camera 250 may be an omnidirectional camera.

According to the configuration of the capturing device 200, because the camera 230 may be brought close to the ground by the lifting/lowering control signal, maintenance and repair of the camera 230 can be performed on the ground. Further, because the insulating band is formed with an insulating material, a worker can be prevented from electric shock outside even during rain.

The central control unit 300 performs functions of receiving the detection signal from the sensing device 100, adjusting a capturing direction of the camera module 232 of the capturing device 200 to capture the sensing area of the sensing device 100 that has transmitted the detection signal, and storing and managing an image captured by the camera 230.

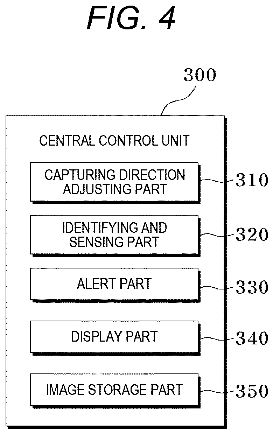

FIG. 4 is a block diagram of a central control unit applied to the monitoring system using an auto-lift, a camera, and a sensing device according to the present invention.

Referring to FIG. 4, the central control unit 300 includes a capturing direction adjusting part 310, an identifying and sensing part 320, an alert part 330, a display part 340, and an image storage part 350.

The capturing direction adjusting part 310 performs a function of transmitting an attitude control signal for controlling the attitude control module 233 of the capturing device 200 so that a sensing area of the sensing device 100 that has transmitted the detection signal is captured in response to the received detection signal. The attitude control signal may include a panning angle, a tilting angle, and a zoom-in/zoom-out range related to the camera module 232.

The panning angle, the tilting angle, and the zoom range may be set according to a position and a distance of the sensing device on the basis of the capturing device.

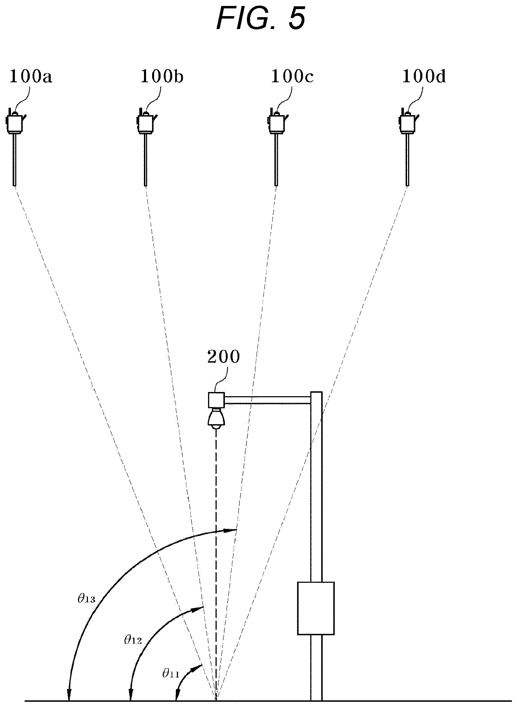

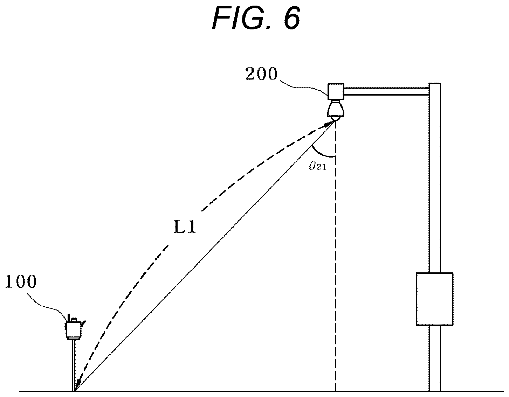

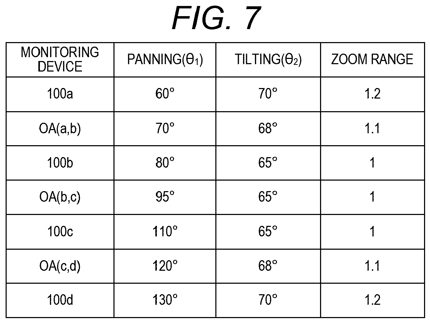

FIGS. 5 and 6 are views illustrating examples of positions of sensing devices based on the capturing device in the monitoring system using an auto-lift, a camera, and a sensing device according to the present invention, and FIG. 7 is a view of a table showing the positions of the sensing devices based on the capturing device.

Referring to FIGS. 5 to 7, a panning angle θ₁, a tilting angle θ₂, and a zoom range of the sensing devices 100 are set on the basis of positions at which the sensing devices 100 are installed, and the set panning angle θ₁, tilting angle θ₂, and zoom range are stored in a data table.

Thus, when a detection signal is received from any one of sensing devices 100a to 100d, the capturing direction adjusting part 310 detects the panning angle θ₁, the tilting angle θ₂, and the zoom range of the corresponding sensing device, and transmits the detected panning angle θ₁, tilting angle θ₂, and zoom range as an attitude control signal to the capturing device 200. Here, the zoom range may be calculated by a distance L1 from the sensing device 100 to the capturing device 200.

The attitude control signal transmitted to the capturing device 200 controls the attitude control module 233 of the camera 230 according to control of the control part 240 and adjusts the capturing direction of the camera module 232.

In FIG. 5, θ₁₁ is an angle of rotation toward a first sensing device 100a from a reference angle related to the panning angle, and θ₁₂ is an angle of rotation toward a second sensing device 100b from the reference angle related to the panning angle. In FIG. 6, θ₂₁ is an angle of rotation toward the first sensing device 100a from a reference angle related to the tilting angle.

Here, the attitude control signal is transmitted while including a capturing resume signal for starting capturing.

That is, an image captured by the camera 230 may begin to be captured after the detection signal is received from the sensing device 100 and be captured only until the detection signal is no longer received from the sensing device 100.

According to design conditions, the data table may be configured so that the attitude control signal is generated through position detection on the basis of the detection signal transmitted from the sensing device 100.

For example, the plurality of sensing devices 100 and the central control unit 300 may be configured so that data is transmitted and received therebetween via wireless communication, and when the central control unit 300 receives a detection signal transmitted from a single sensing device 100, two or more sensing devices neighboring the sensing device that has transmitted the detection signal may be operated to track a position of the sensing device that has transmitted the detection signal.

Further, as illustrated in FIG. 5, when the sensing devices 100 are installed along a boundary line, a virtual fence may be generated by the sensing devices 100.

A detection signal of an object that has approached a monitoring area may be received from two or more sensing devices 100 according to movement of the object.

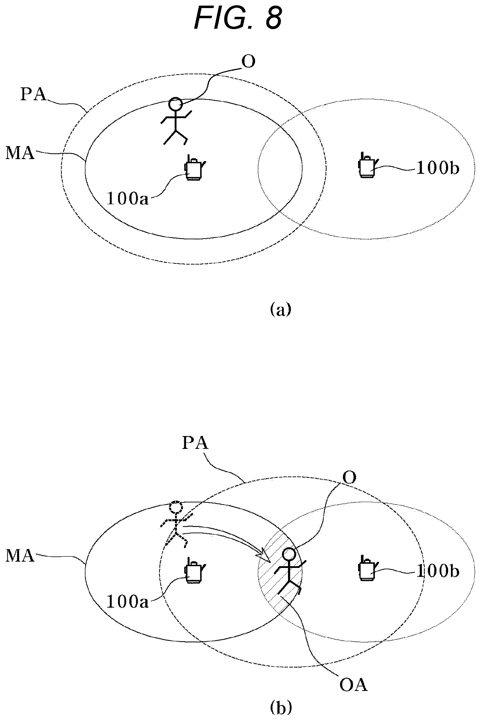

FIG. 8 is a view illustrating a photograph area of the capturing device in the monitoring system using an auto-lift, a camera, and a sensing device according to the present invention.

Referring to FIG. 8(a), when an object O enters a monitoring area MA of the first sensing device 100a, the first sensing device 100a senses the object O and transmits a detection signal thereof to the central control unit 300. The central control unit 300 that has received the detection signal transmits a capturing resume signal and an attitude control signal to the capturing device 200.

Thus, the capturing device 200 simultaneously operates the camera module 232 on the basis of the received capturing resume signal and attitude control signal, resumes capturing, controls the attitude control module 233, adjusts the capturing direction of the camera module 232, and moves capturing direction toward the monitoring area of the first sensing device 100a. Here, a photograph area PA of the camera module 232 may be set to be relatively larger than or equal to the monitoring area MA of the first sensing device 100a.

Then, when the object O moves toward the second sensing device 100b as illustrated in FIG. 8(b), the second sensing device 100b senses the object O and transmits a detection signal thereof to the central control unit 300.

Here, when the object O is at a position at which the monitoring area of the first sensing device 100a and the monitoring area of the second sensing device 100b overlap each other, each of the first sensing device 100a and the second sensing device 100b transmits a detection signal. Accordingly, the central control unit 300 controls the attitude control module 233 of the camera 230 so that the camera module 232 captures an object area OA (see FIG. 8(b)), which is an overlapping area between the monitoring areas of the first sensing device 100a and the second sensing device 100b.

That is, the central control unit 300 may be configured to adjust the capturing direction of the camera 230 of the capturing device 200 to capture the object area, which is the overlapping area between the monitoring areas of the sensing devices 100, when a detection signal of the object is received from the plurality of sensing devices 100.

The identifying and sensing part 320 is configured to generate an identification code of the object from the image received from the camera 230. The identifying and sensing part 320 receives an image captured by the camera module 232 of the camera 230, detects a shape of the object from the image, and generates an identification code of the object.

Here, movement of the object, distortion of a screen, changes in color, and the like may be used to detect the shape of the object from the image.

The identification code of the detected shape may be generated by comparing the detected shape with pre-input shapes. For example, shapes of human beings, land animals, birds, and vehicles viewed from various angles may be stored as images, and when a detected shape and a stored image is matched and a matching rate is determined to be a predetermined value or higher, the detected shape may be considered as a matching shape, and an identification code may be assigned thereto.

The alert part 330 is configured to generate an alert signal on the basis of an identification code of the object identified by the identifying and sensing part 320. The alert signal may be a voice message when the identification code of the identified object indicates that the object is a human being or a vehicle, and the alert signal may be an ultrasonic signal when the identification code of the identified object indicates that the object is a bird or a land animal, that is, an animal.

For example, when the object is determined as a human being (or a vehicle), a voice message may be output to guide the object not to approach, and when the object is determined as an animal, an ultrasonic wave that the corresponding animal dislikes may be emitted to prevent approach of the animal.

The display part 340 is configured to display an image captured and transmitted from the capturing device 200, and the image storage part 350 is configured to store and manage the transmitted image.

The alert device 400 is configured to generate an alert sound or alert light in response to an alert signal output from the central control unit 300. The alert device 400 may be configured with a speaker or a light bar.

The alert device 400 may be coupled to the sensing devices 100 or, with several or several tens of the sensing devices 100 set as a single group, the alert device 400 may be installed in each group.

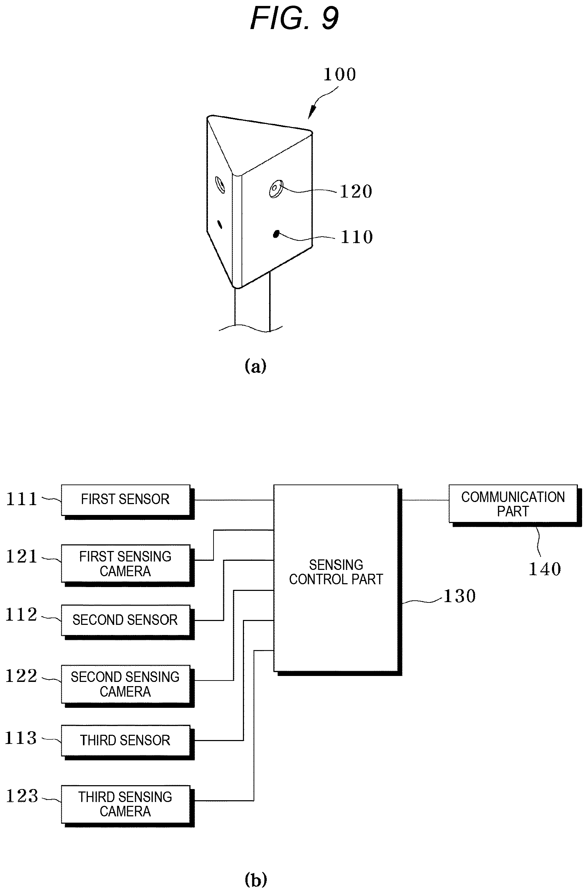

FIG. 9 is a view illustrating a configuration of the sensing device in the monitoring system using an auto-lift, a camera, and a sensing device according to the present invention.

Referring to FIG. 9, FIG. 9(a) illustrates an exterior of the sensing device 100, and FIG. 9(b) is a view illustrating an internal configuration of the sensing device. The sensing device 100 may include sensors 110, sensing cameras 120, a sensing control part 130, and a communication part 140.

Here, the sensing device 100 may include the plurality of sensors 110 configured to sense an approaching object around 360°. For example, as illustrated in FIG. 9, a main body of the sensing device 100 may be formed in a triangular prism shape having three side surfaces, and the sensor 110 may be installed at each of the side surfaces to sense an object approaching from the side. Here, although the main body of the sensing device 100 is illustrated as being formed in the triangular prism shape in FIG. 9, the main body of the sensing device 100 may also be formed in a cylindrical shape.

The sensing cameras 120 may correspond to the sensors 110 one by one. When a detection signal is detected from the sensor 110, the sensing camera captures an area corresponding thereto.

For example, as illustrated in FIG. 9(b), the sensors 110 may include a first sensor 111, a second sensor 112, and a third sensor 113, and the sensing cameras 120 may include a first sensing camera 121, a second sensing camera 122, and a third sensing camera 123 respectively corresponding to the sensors 111, 112, and 113. When a detection signal of an object is input from the first sensor 111, the first sensing camera 121 corresponding to the first sensor 111 may be operated to capture the sensing area of the first sensor 111.

Likewise, the second sensing camera 122 operates in response to a detection signal from the second sensor 112, and the third sensing camera 123 operates according to a detection signal from the third sensor 113.

The sensing control part 130 is configured to operate the sensing camera 120 corresponding to the sensor 110 that has output a corresponding detection signal in response to a detection signal from the sensor 110 and output a captured image from the operated sensing camera 120.

The communication part 140 transmits a detection signal detected by the sensor 110 and an image captured by the sensing camera 120 to the central control unit 300 according to control of the sensing control part 130.

Here, although the communication part 140 may be configured to transmit a detection signal and a captured image by a wired or wireless communication method, a wireless communication method may be applied to the communication part 140 because security of lines is weak when a wired communication method is applied.

Here, in a case in which a detection signal output from the sensing device 100 and a captured image are transmitted to the central control unit 300 by a wireless communication method, communication becomes impossible when the sensing device 100 and the central control unit 300 are spaced apart by a distance larger than a distance in which wireless communication is possible. Accordingly, data including the detection signal output from the sensing device 100 and the captured image may be transmitted via another nearby sensing device capable of wireless communication.

For example, when the sensing devices 100a to 100d are installed within a wireless communication range from each other as illustrated in FIG. 5, and the sensing device 100d at the rightmost side is disposed within a range capable of wirelessly communicating with the central control unit 300, a detection signal sensed by the sensing device 100a at the leftmost side and a captured image are transmitted to the sensing device 100b within the range capable of wireless communication, and the sensing device 100b that has received the detection signal and the captured image transmits the data (the detection signal and the captured mage) to the next sensing device 100c. Subsequently, the sensing device 100c that has received the data transmits the data to the sensing device 100d, and the sensing device 100d that has received the data transmits the data to the central control unit 300.

In this process, an identification code may be assigned to each of the sensing devices 100a to 100d, and the identification code may be combined with the data whenever the data passes through sensing devices.

For example, in the above process, all of the identification codes of the sensing device 100a to the sensing device 100d may be included in the final data transmitted to the central control unit 300. Accordingly, the central control unit 300 may recognize the initially transmitted identification code besides the identification codes combined to the data due to the data passing through the sensing devices and detect the sensing device 100 that has initially identified an object.

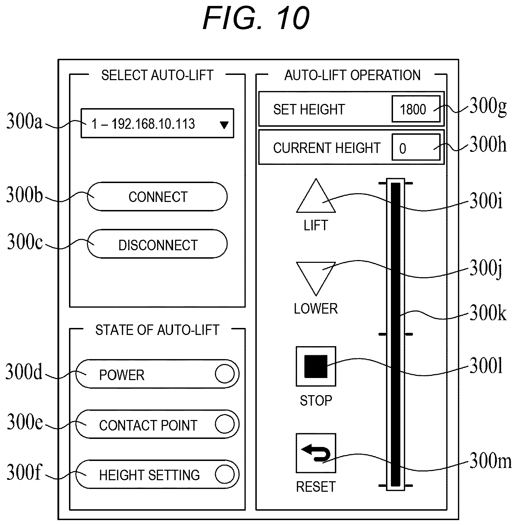

FIG. 10 is a view illustrating an interface for controlling a camera to be lifted and lowered by the central control unit applied to the monitoring system using an auto-lift, a camera, and a sensing device according to the present invention.

Referring to FIG. 10, the interface of the central control unit 300 to control a camera to be lifted and lowered includes an auto-lift selection interface for selecting a main body part in which a camera of an object to be controlled is installed, an auto-lift state interface for displaying a connection state between a main body part and the camera and a set height, and an auto-lift operation interface for controlling lifting and lowering of the camera.

The auto-lift selection interface may include a selection interface 300a including Internet protocol (IP) addresses and configured to select a main body part, a connect button 300b configured to connect the central control unit 300 and the main body part 210 to enable communication therebetween, and a disconnect button 300c configured to disconnect the connection between the central control unit 300 and the main body part 210.

IP addresses of connectable main body parts are displayed in the form of select menu bar in the selection interface 300a. Here, the IP addresses of connectable main body parts and IP addresses of non-connectable main body parts may be differentiated and displayed through a packet Internet groper (PING) test signal. For example, the IP addresses of the connectable main body parts may be shown in black, and the IP addresses of the non-connectable main body parts may be shown in gray. Thus, the non-connectable main body parts may be easily checked.

When an IP address displayed in the selection interface 300a is selected and then the connect button 300b is selected, the central control unit 300 and the main body part 210 remain in a connected state in which communication is possible, and when the disconnect button 300c is selected, the connection between the central control unit 300 and the main body part 210 is disconnected.

The auto-lift state interface may include a power interface 300d configured to display whether power is applied to a main body part, a contact point interface 300e configured to display a connection state between the main body part and the camera, and a height setting interface 300f configured to display whether a height of the camera is set.

When the connect button 300b is selected, the central control unit 300 and the main body part 210 are changed to a connected state in which communication is possible. Here, the central control unit 300 receives information including whether power is applied to a main body part, whether the main body part and the camera are connected, and whether the height of the camera is set from the main body part 210 displays the received information on the power interface 300d, the contact point interface 300e, and the height setting interface 300f.

That is, whether power is applied to the main body part is displayed with a changed color in the power interface 300d, whether the main body part and the camera are connected may be displayed with different colors in the contact point interface 300e, and whether the height of the camera is set is shown by lighting in the height setting interface 300f.

For example, a red lamp may be turned on in the power interface 300d when the central control unit 300 and the main body part are connected due to selecting the connect button 300b and it is detected that power is applied to the main body part. A yellow lamp may be turned on in the contact point interface 300e when it is detected that the camera is connected to the main body part, and a green lamp may be turned on when the height of the camera is set.

The auto-lift operation interface may include a set height interface 300g configured to display a set height of the camera, a current height interface 300h configured to display a current height of the camera, a lift button 300i configured to lift the camera, a lower button 300j configured to lower the camera, a gage bar interface 300k configured to display the current height of the camera corresponding to the set height of the camera in a graph format, a stop button 3001 configured to stop the lifting/lowering operation of the camera, and a reset button 300m configured to reconnect the main body part and the camera.

Due to selecting the lift button 300i, the motor 223 of the main body part 210 is operated to rotate the reel 221, and due to rotation of the reel 221, the insulating band 222 is unwound from the reel 221, and the camera 230 is lowered.

Here, the lift button 300i and the lower button 300j may be configured to respectively maintain lifted and lowered states due to being selected.

Thus, the stop button 3001 is configured to deselect the lift button 300i and the lower button 300j and stop the operation.

According to design conditions, when the lift button 300i and the lower button 300j are configured to operate only when selected, the stop button 3001 may be omitted.

Here, when the camera 230 is lowered from the main body part 210 and connection between the main body part and the camera is disconnected due to selecting the lower button 300j, lighting in the contact point interface 300e is turned off, and the auxiliary camera 250 is operated. Accordingly, an image captured by the auxiliary camera 250 is transmitted to the central control unit 300 and displayed, and an image of surroundings may be captured.

The gage bar interface 300k is configured to display the current height of the camera corresponding to the set height of the camera in a graph format and visually displays the current height of the camera 230.

In this configuration, the lift button 300i may be configured to be automatically deselected in association with the contact point interface 300e. That is, a lamp may be turned on due to the contact point in the contact point interface 300e when the camera 230 is lifted and connected to the main body part 210 due to selecting the lift button 300i, and when the lamp in the contact point interface 300e is turned on, the lift button 300i may be deselected, and the operation of the motor 223 may stop.

The lower button 300j may be configured to be automatically deselected in association with the current height interface 300h. That is, when the camera 230 lowers due to selecting the lower button 300j, and the value displayed in the current height interface 300h becomes "0," the lower button 300j may be deselected, and the operation of the motor 223 may stop.

The reset button 300m is configured to re-connect the main body part 210 and the camera 230 to solve an unstable connection state therebetween. Due to selecting the reset button 300m, the camera 230 is lowered by a predetermined distance and then lifted again to be connected to the main body part 210.

According to the present invention, because a capturing direction of a camera is controlled, on the basis of a detection signal detected by the sensing device installed in a monitoring area, in a direction toward the sensing device that has output the detection signal, and intrusion or approach of an object to be sensed is captured, an object approaching within the monitoring area can be intensively captured.

Further, because an entire area sensed by peripheral sensing devices can be captured using a single camera, a wide area can be monitored with a low installation cost.

Furthermore, an approaching object can be identified, and an alert sound corresponding to the identified object can be generated.

Although exemplary embodiments of the present invention have been described above, the scope of the present invention is not limited to the above, and those within a substantially equivalent scope as the embodiments of the present invention should be understood as belonging to the scope of the present invention. Various modifications are possible by one of ordinary skill in the art to which the invention pertains within the protection scope of the present invention.

## Claims

1. A monitoring system, the monitoring system comprising:
a) a plurality of sensing devices (100, 100a-c) configured to set a predetermined area as a sensing area (MA), sense an object (O) approaching within the sensing area, and output a detection signal of the sensed object (O);
b) a capturing device (200) having a camera (230);
c) a central control unit (300) configured to receive the detection signal from the sensing device (100), adjust a capturing direction of the capturing device (200) to capture the sensing area of the sensing device (100) that has transmitted the detection signal, and store and manage an image captured by the capturing device (200); and
d) an alert device (400) configured to generate an alert sound or alert light in response to an alert signal output from the central control unit (300),
e) wherein, when the detection signal of the object is received from the plurality of sensing devices (100), the central control unit (300) adjusts a capturing direction of the camera (230) to capture an object area (OA) which is an overlapping area (OA) of two adjacent sensing areas (MA) of the sensing devices (100); and
f) wherein the capturing device (200) comprises an attitude control module (233) and the central control unit (300) includes a capturing direction adjusting part (310) adapted to transmit an attitude control signal for controlling the attitude control module (233) so that a sensing area of a sensing device (100) that has transmitted the detection signal is captured in response to the received detection signal, wherein the attitude control signal includes a panning angle, a tilting angle and zoom-in/zoom-out range related to a camera module (232) of the camera (230); and
g) wherein the panning angle, the tilting angle and a zoom range related to the camera module (232) are set on the basis of positions at which the sensing devices (100) are installed and the set panning angle, tilting angle and zoom range are stored in a data table for the respective sensing devices (100a, 100b, 100c, 100d) and the overlapping areas (OA(a, b), OA(b, c), OA(c, d)); wherein
h1) the sensing device (100) has a cylindrical or triangular prism shape main body with a plurality of sensing cameras (120; 121, 122, 123) and sensors (110; 111, 112, 113) wherein the sensing cameras (120; 121, 122, 123) correspond to the sensors (110; 111, 112, 113) one by one, the sensing cameras (120; 121, 122, 123) and the sensors (110; 111, 112, 113) being installed at the side surface or at each of the side surfaces pointed in different angular directions, each of the sensors (111, 112, 113) outputting a detection signal and each of the corresponding sensing cameras (121, 122, 123) capturing an area corresponding to the respective detection signal;
h2) the sensing device (100) further comprising a communication part (140) and a sensing control part (130), the sensing control part (130) configured to operate the sensing camera (120) corresponding to the sensor (110) that has output a corresponding detection signal in response to a detection signal from the sensor (110) and to output a captured image from the operated sensing camera (120), the sensing control part (130) connected to the communication part (140), the communication part (140) configured to transmit by a wireless communication method a detection signal detected by the sensor (110) and an image captured by the sensing camera (120) to the central control unit (300); wherein
h3) when the detection signal output from the sensing device (100) and the captured image are transmitted to the central control unit (300) by a wireless communication method and communication becomes impossible when the sensing device (100) and the central control unit (300) are spaced apart by a distance larger than a distance in which wireless communication is possible, data including the detection signal output from the sensing device (100) and the captured image are transmitted via another nearby sensing device (100) within a range capable of wireless communication with the central control unit (300).

2. The monitoring system of claim 1, wherein an identification code is assigned to each of the sensing devices (100a, 100d) and the identification code is included in the data transmitted to the central control unit (300), wherein the central control unit (300) is adapted to recognize the transmitted identification code and detect the sensing device (100) that has identified the object.

3. The monitoring system of claim 1, wherein the central control unit (300) includes:
i1) an image storage part (350) configured to receive, store, and manage the image captured by the capturing device (200);
i2) an identifying and sensing part (320) configured to generate an identification code of the object from the image received from the capturing device (200);
i3) an alert part (330) configured to generate an alert signal on the basis of a type of the object identified by the identifying and sensing part (320); and
i4) a display part (340) configured to display the image received from the capturing device (200).

4. The monitoring system of claim 1, wherein a photograph area (PA) of the camera module (232) is larger than the sensing area (MA) of the sensing devices (100a-100d); and
when an object (O) is at the object area (OA) of the two adjacent sensing areas (MA) both corresponding sensing devices (100a, 100b) transmit a detection signal and accordingly the camera module photographing area (PA) captures the object area (OA) and portions of the monitoring areas of the sensing devices (100a, 100b).

## Patentansprüche

1. Überwachungssystem, wobei das Überwachungssystem Folgendes umfasst:
a) mehrere Erfassungsvorrichtungen (100, 100a-c), die eingerichtet sind, um einen vorbestimmten Bereich als Erfassungsbereich (MA) festzulegen, ein Objekt (O), das sich innerhalb des Erfassungsbereichs nähert, zu erfassen und ein Erfassungssignal des erfassten Objekts (O) auszugeben;
b) eine Aufnahmevorrichtung (200), die eine Kamera (230) aufweist;
c) eine zentrale Steuereinheit (300), die eingerichtet ist, um das Erfassungssignal von der Erfassungsvorrichtung (100) zu empfangen, eine Aufnahmerichtung der Aufnahmevorrichtung (200) einzustellen, um den Erfassungsbereich der Erfassungsvorrichtung (100) aufzunehmen, die das Erfassungssignal übertragen hat, und ein durch die Erfassungsvorrichtung (200) aufgenommenes Bild zu speichern und zu verwalten; und
d) eine Warnvorrichtung (400), die eingerichtet ist, um einen Warnton oder ein Warnlicht als Reaktion auf ein von der zentralen Steuereinheit (300) ausgegebenes Warnsignal zu erzeugen,
e) wobei, wenn das Erfassungssignal des Objekts von den mehreren Erfassungsvorrichtungen (100) empfangen wird, die zentrale Steuereinheit (300) eine Aufnahmerichtung der Kamera (230) einstellt, um einen Objektbereich (OA) aufzunehmen, der ein Überlappungsbereich (OA) von zwei benachbarten Erfassungsbereichen (MA) der Erfassungsvorrichtungen (100) ist; und
f) wobei die Aufnahmevorrichtung (200) ein Haltungssteuermodul (233) umfasst und die zentrale Steuereinheit (300) einen Aufnahmerichtung-Einstellteil (310) aufweist, der ausgelegt ist, um ein Haltungssteuersignal zum Steuern des Haltungssteuermoduls (233), so dass ein Erfassungsbereich einer Erfassungsvorrichtung (100), die das Erfassungssignal übertragen hat, als Reaktion auf das empfangene Erfassungssignal aufgenommen wird, zu übertragen, wobei das Haltungssteuersignal einen Schwenkwinkel, einen Neigungswinkel und einen Hineinzoom/Herauszoom-Bereich in Bezug auf ein Kameramodul (232) der Kamera (230) aufweist; und
g) wobei der Schwenkwinkel, der Neigungswinkel und ein Zoombereich in Bezug auf das Kameramodul (232) auf der Basis von Positionen festgelegt sind, an denen die Erfassungsvorrichtungen (100) installiert sind, und der Schwenkwinkel, Neigungswinkel und Zoombereich in einer Datentabelle für die jeweiligen Erfassungsvorrichtungen (100a, 100b, 100c, 100d) und die Überlappungsbereiche (OA(a, b), OA(b, c), OA(c, d)) gespeichert sind; wobei
h1) die Erfassungsvorrichtung (100) einen zylindrischen oder dreieckigen Prismaform-Hauptkörper mit mehreren Erfassungskameras (120; 121, 122, 123) und Sensoren (110; 111, 112, 113) aufweist, wobei die Erfassungskameras (120; 121, 122, 123) den Sensoren (110; 111, 112, 113) einzeln entsprechen, wobei die Erfassungskameras (120; 121, 122, 123) und die Sensoren (110; 111, 112, 113) an der Seitenfläche oder an jeder der Seitenflächen, die in unterschiedliche Winkelrichtungen weisen, installiert sind, wobei jeder der Sensoren (111, 112, 113) ein Richtungssignal ausgibt und jede der entsprechenden Erfassungskameras (121, 122, 123) einen Bereich, der dem jeweiligen Erfassungssignal entspricht, aufnimmt;
h2) die Erfassungsvorrichtung (100) ferner einen Kommunikationsteil (140) und einen Erfassungssteuerteil (130) umfasst, wobei der Erfassungssteuerteil (130) eingerichtet ist, um die Erfassungskamera (120) zu betreiben, die dem Sensor (110) entspricht, der ein entsprechendes Erfassungssignal als Reaktion auf ein Erfassungssignal von dem Sensor (110) ausgegeben hat, und um ein aufgenommenes Bild von der betriebenen Erfassungskamera (120) auszugeben, wobei der Erfassungssteuerteil (130) mit dem Kommunikationsteil (140) verbunden ist, wobei der Kommunikationsteil (140) eingerichtet ist, um durch ein Drahtloskommunikationsverfahren ein durch den Sensor (110) erfasstes Erfassungssignal und ein durch die Erfassungskamera (120) aufgenommenes Bild an die zentrale Steuereinheit (300) zu übertragen; wobei
h3) wenn das von der Erfassungsvorrichtung (100) ausgegebene Erfassungssignal und das aufgenommene Bild an die zentrale Steuereinheit (300) durch ein Drahtloskommunikationsverfahren übertragen werden und eine Kommunikation möglich wird, wenn die Erfassungsvorrichtung (100) und die zentrale Steuereinheit (300) in einem Abstand voneinander beabstandet sind, der größer ist als ein Abstand, in dem eine Drahtloskommunikation möglich ist, Daten, die das von der Erfassungsvorrichtung (100) ausgegebene Erfassungssignal und das aufgenommene Bild umfassen, über eine andere naheliegende Erfassungsvorrichtung (100) innerhalb eines Bereichs übertragen werden, der eine Drahtloskommunikation mit der zentralen Steuereinheit (300) ermöglicht.

2. Überwachungssystem nach Anspruch 1, wobei ein Identifizierungscode jeder der Erfassungsvorrichtungen (100a, 100d) zugeordnet ist und der Identifizierungscode in den an die zentrale Steuereinheit (300) übertragenen Daten enthalten ist, wobei die zentrale Steuereinheit (300) ausgelegt ist, um den übertragenen Identifizierungscode zu erkennen und die Erfassungsvorrichtung (100), die das Objekt identifiziert hat, zu erfassen.

3. Überwachungssystem nach Anspruch 1, wobei die zentrale Steuereinheit (300) Folgendes aufweist:
i1) einen Bildspeicherteil (350), der eingerichtet ist, um das durch die Aufnahmevorrichtung (200) aufgenommene Bild zu empfangen, zu speichern und zu verwalten;
i2) einen Identifizierungs- und Erfassungsteil (320), der eingerichtet ist, um einen Identifizierungscode des Objekts von dem von der Aufnahmevorrichtung (200) empfangenen Bild zu erzeugen;
i3) einen Warnteil (330), der eingerichtet ist, um ein Warnsignal auf der Basis eines Typs des durch den Identifizierungs- und Erfassungsteil (320) identifizierten Objekts zu erzeugen; und
i4) einen Anzeigeteil (340), der eingerichtet ist, um das von der Aufnahmevorrichtung (200) empfangene Bild anzuzeigen.

4. Überwachungssystem nach Anspruch 1, wobei ein Fotografiebereich (PA) des Kameramoduls (232) größer ist als der Erfassungsbereich (MA) der Erfassungsvorrichtungen (100a-100d); und
wenn ein Objekt (O) in dem Objektbereich (OA) der zwei benachbarten Erfassungsbereiche (MA) ist, beide entsprechenden Erfassungsvorrichtungen (100a, 100b) ein Erfassungssignal übertragen und folglich der Kameramodul-Fotografiebereich (PA) den Objektbereich (OA) und Abschnitte der Überwachungsbereiche der Erfassungsvorrichtungen (100a, 100b) aufnimmt.

## Revendications

1. Système de surveillance, le système de surveillance comprenant :
a) une pluralité de dispositifs de décèlement (100, 100a à c) configurés pour régler une zone prédéterminée en tant que zone de décèlement (MA), déceler un objet (O) approchant au sein de la zone de décèlement, et fournir en sortie un signal de détection de l'objet décelé (O) ;
b) un dispositif de capture (200) ayant une caméra (230) ;
c) une unité de commande centrale (300) configurée pour recevoir le signal de détection en provenance du dispositif de décèlement (100), ajuster une direction de capture du dispositif de capture (200) pour capturer la zone de décèlement du dispositif de décèlement (100) qui a transmis le signal de détection, et stocker et gérer une image capturée par le dispositif de capture (200) ; et
d) un dispositif d'alerte (400) configuré pour générer un son d'alerte ou une lumière d'alerte en réponse à un signal d'alerte fourni en sortie depuis l'unité de commande centrale (300),
e) dans lequel, lorsque le signal de détection de l'objet est reçu en provenance de la pluralité de dispositifs de décèlement (100), l'unité de commande centrale (300) ajuste une direction de capture de la caméra (230) pour capturer une zone d'objet (OA) qui est une zone de chevauchement (OA) de deux zones de décèlement (MA) adjacentes des dispositifs de décèlement (100) ; et
f) dans lequel le dispositif de capture (200) comprend un module de commande d'attitude (233) et l'unité de commande centrale (300) comporte une partie d'ajustement de direction de capture (310) adaptée pour transmettre un signal de commande d'attitude pour commander le module de commande d'attitude (233) de sorte qu'une zone de décèlement d'un dispositif de décèlement (100) qui a transmis le signal de détection soit capturée en réponse au signal de détection reçu, dans lequel le signal de commande d'attitude comporte un angle de pivotement horizontal, un angle d'inclinaison verticale et une plage de zoom avant/zoom arrière liés à un module de caméra (232) de la caméra (230) ; et
g) dans lequel l'angle de pivotement horizontal, l'angle d'inclinaison verticale et une plage de zooms liés au module de caméra (232) sont réglés sur la base de positions auxquelles les dispositifs de décèlement (100) sont installés et l'angle de pivotement horizontal, l'angle d'inclinaison verticale et la plage de zooms réglés sont stockés dans une table de données pour les dispositifs de décèlement (100a, 100b, 100c, 100d) respectifs et les zones de chevauchement (OA(a, b), OA(b, c), OA(c, d)) ; dans lequel
h1) le dispositif de décèlement (100) a un corps principal en forme de prisme triangulaire ou cylindrique avec une pluralité de caméras de décèlement (120 ; 121, 122, 123) et des capteurs (110 ; 111, 112, 113) dans lequel les caméras de décèlement (120 ; 121, 122, 123) correspondent aux capteurs (110 ; 111, 112, 113) un par un, les caméras de décèlement (120 ; 121, 122, 123) et les capteurs (110 ; 111, 112, 113) étant installés au niveau de la surface de côté ou au niveau de chacune des surfaces de côté dirigées dans des directions angulaires différentes, chacun des capteurs (111, 112, 113) fournissant en sortie un signal de détection et chacune des caméras de décèlement (121, 122, 123) correspondantes capturant une zone correspondant au signal de détection respectif ;
h2) le dispositif de décèlement (100) comprenant en outre une partie de communication (140) et une partie de commande de décèlement (130), la partie de commande de décèlement (130) étant configurée pour faire fonctionner la caméra de décèlement (120) correspondant au capteur (110) qui a fourni en sortie un signal de détection correspondant en réponse à un signal de détection provenant du capteur (110) et pour fournir en sortie une image capturée depuis la caméra de décèlement en fonctionnement (120), la partie de commande de décèlement (130) étant connectée à la partie de communication (140), la partie de communication (140) étant configurée pour transmettre par un procédé de communication sans fil un signal de détection détecté par le capteur (110) et une image capturée par la caméra de décèlement (120) à l'unité de commande centrale (300) ; dans lequel
h3) lorsque le signal de détection fourni en sortie depuis le dispositif de décèlement (100) et l'image capturée sont transmis à l'unité de commande centrale (300) par un procédé de communication sans fil et une communication devient impossible lorsque le dispositif de décèlement (100) et l'unité de commande centrale (300) sont espacés d'une distance plus grande qu'une distance dans laquelle une communication sans fil est possible, des données incluant le signal de détection fourni en sortie depuis le dispositif de décèlement (100) et l'image capturée sont transmises via un autre dispositif de décèlement proche (100) au sein d'une plage capable de communication sans fil avec l'unité de commande centrale (300).

2. Système de surveillance selon la revendication 1, dans lequel un code d'identification est attribué à chacun des dispositifs de décèlement (100a, 100d) et le code d'identification est inclus dans les données transmises à l'unité de commande centrale (300), dans lequel l'unité de commande centrale (300) est adaptée pour reconnaître le code d'identification transmis et détecter le dispositif de décèlement (100) qui a identifié l'objet.

3. Système de surveillance selon la revendication 1, dans lequel l'unité de commande centrale (300) inclut :
i1) une partie de stockage d'image (350) configurée pour recevoir, stocker, et gérer l'image capturée par le dispositif de capture (200) ;
i2) une partie d'identification et de décèlement (320) configurée pour générer un code d'identification de l'objet à partir de l'image reçue en provenance du dispositif de capture (200) ;
i3) une partie d'alerte (330) configurée pour générer un signal d'alerte sur la base d'un type de l'objet identifié par la partie d'identification et de décèlement (320) ; et
i4) une partie d'affichage (340) configurée pour afficher l'image reçue en provenance du dispositif de capture (200).

4. Système de surveillance selon la revendication 1, dans lequel une zone de photographie (PA) du module de caméra (232) est plus grande que la zone de décèlement (MA) des dispositifs de décèlement (100a à 100d) ; et
lorsqu'un objet (O) est au niveau de la zone d'objet (OA) des deux zones de décèlement (MA) adjacentes les deux dispositifs de décèlement correspondants (100a, 100b) transmettent un signal de détection et en conséquence la zone de photographie de module de caméra (PA) capture la zone d'objet (OA) et des portions des zones de surveillance des dispositifs de décèlement (100a, 100b).
